Europäisches Patentamt

European Patent Office

Office européen des brevets

(11) Numéro de publication : **0 109 889**
**B1**

(12) **FASCICULE DE BREVET EUROPÉEN**

(45) Date de publication du fascicule du brevet :
01.10.86

(51) Int. Cl.⁴ : **B 23 K 9/12**, B 23 K 9/225,
B 23 K 9/00

(21) Numéro de dépôt : 83402175.0

(22) Date de dépôt : 09.11.83

(54) Procédé et installation de soudage de grilles pour assemblage de combustible nucléaire.

(30) Priorité : 09.11.82 FR 8218800

(43) Date de publication de la demande :
30.05.84 Bulletin 84/22

(45) Mention de la délivrance du brevet :
01.10.86 Bulletin 86/40

(84) Etats contractants désignés :
BE DE GB IT SE

(56) Documents cités :
FR-A- 2 257 382
FR-A- 2 308 458
GB-A- 844 201
US-A- 3 830 998
US-A- 4 221 319
US-A- 4 319 112

(73) Titulaire : SOCIETE COGEMA, FRAMATOME et URA-
NIUM PECHINEY
2, rue Paul Dautier
F-78140 Velizy Villacoublay (FR)

(72) Inventeur : Vere, Bernard
2, les Chusets Brie et Angonnes
F-38320 Eybens (FR)
Inventeur : Mathevon, Paul
Avenue Achille Maucuer
F-84500 Bollene (FR)
Inventeur : Le Pargneux, Jacques
125, rue Duguesclin
F-69006 Lyon (FR)

(74) Mandataire : Fort, Jacques et al
CABINET PLASSERAUD 84, rue d'Amsterdam
F-75009 Paris (FR)

## Description

La présente invention concerne la fabrication des grilles destinées à être incorporées dans des assemblages de combustible de réacteur nucléaire. Elle trouve une application particulièrement importante dans la fabrication des grilles destinées à des assemblages dont l'ossature comprend des pièces d'extrémité reliées par des tirants emprisonnés dans certains des alvéoles de grilles réparties angulairement le long des tirants, les autres alvéoles des grilles supportant les crayons de combustible de l'assemblage.

Les grilles comprennent en général deux jeux de plaquettes disposées suivant deux directions orthogonales et assemblées à mi-fer afin de définir les cellules élémentaires que traversent les crayons et les tirants. Les plaquettes sont au surplus reliées, à leur périphérie, à une ceinture présentant la même forme que les plaquettes. Pour assurer la cohésion des grilles, ces pièces constitutives sont solidarisées à leurs intersections. Cette opération s'effectue souvent à l'heure actuelle par brasage manuel, c'est-à-dire par une opération longue et fastidieuse qui, au surplus, ne garantit par une reproductibilité pleinement satisfaisante, même si l'on utilise un gabarit de maintien relatif, tel que celui décrit dans le document US-A-4 111 348, en vue de la réalisation de grilles dont les plaquettes sont découpées pour constituer des ressorts d'appui sur les crayons, ou dans le document FR-A-2 364 729.

Le document GB-A-844 201 décrit de son côté un procédé et un dispositif de soudage d'objets, notamment en zirconium, dans une chambre à atmosphère contrôlée. Le dispositif comprend des électrodes de soudage déplaçables par rapport à l'objet à souder, dont la nature est quelconque.

L'invention vise à fournir un procédé et une installation de solidarisation par soudage des diverses pièces constitutives d'une grille, applicables aussi bien aux grilles à ressort découpé qu'à celles à ressort rapporté, permettant d'effectuer en séquence les soudures nécessaires dans des conditions assurant le maintien des pièces et l'absence de contraintes susceptibles de les déformer. Dans des modes particuliers d'exécution de l'invention, celle-ci assure la compensation des jeux dus au retrait du métal lors de l'opération de soudage, permet d'effectuer l'opération en atmosphère de gaz de protection et permet une automaticité poussée. Dans un mode d'exécution avantageux, le soudage s'effectue entièrement en boîte à gants, en des postes successifs séparés par des parois évitant les turbulences du gaz de protection, les grilles simplement assemblées pouvant être introduites et les grilles soudées extraites sans rupture de l'étanchéité.

Dans ce but, l'invention propose notamment un procédé de soudage de grilles constituées par des jeux de plaquettes disposées orthogonalement et dont les parties terminales sont solidarisées d'une ceinture, caractérisé en ce qu'on place la grille dans un cadre de mise en forme et de maintien mécanique de celle-ci permettant d'accéder aux points à souder sur les deux faces et sur les côtés de la grille ; on place le cadre contenant la grille sur un dispositif de retournement appartenant à un carrousel mobile. On amène le cadre à l'aide du carrousel en un premier emplacement de soudage et on y effectue le soudage sur au moins une face de la grille à l'aide d'un organe de soudage déplaçable selon deux directions perpendiculaires permettant de l'amener au droit de chacun des points de soudage sur la face ; et on amène le cadre en un second emplacement de soudage où l'on soude les plaquettes à la ceinture à l'aide d'un second organe de soudage déplaçable selon une seule direction, après basculement de 90° du cadre à l'aide du dispositif de retournement ; et on répète éventuellement l'opération jusqu'à exécution de l'ensemble des soudages.

L'invention propose également une installation comprenant, dans une enceinte à atmosphère contrôlée munie d'un sas : un carrousel portant au moins un dispositif de retournement qui comporte un berceau et qui est capable d'amener un cadre de maintien mécanique contenant une grille assemblée et posée sur le berceau successivement en un premier et en un second emplacements de soudage, le dispositif ayant des moyens de changement d'orientation du berceau et du cadre ; un premier équipement de soudage des plaquettes entre elles et à la ceinture, placé au premier emplacement et comportant un organe de soudage et des moyens pour le déplacer parallèlement à la grille de façon à l'amener au droit de chacun des points de soudage et perpendiculairement à la grille entre une position de soudage et une position rétractée ; et un deuxième équipement de soudage placé au second emplacement, comprenant un organe de soudage déplaçable suivant une direction parallèle à l'un des côtés de la grille dans l'orientation donnée à celle-ci par le dispositif de retournement, permettant de fixer en bout les plaquettes à la ceinture.

Diverses séquences d'opérations de soudage peuvent être adoptées, en des emplacements de soudage tous différents (ce qui implique la présence de plus de deux emplacements) ou par plusieurs interventions sur des faces et des côtés différents aux mêmes emplacements.

L'invention sera mieux comprise à la lecture de la description qui suit d'un mode particulier d'exécution, donné à titre d'exemple non limitatif. La description se réfère aux dessins qui l'accompagnent, dans lesquels :

la figure 1 est un schéma en perspective montrant une fraction d'une grille à laquelle est applicable l'invention,

la figure 2 est une vue en perspective d'un cadre de maintien mécanique d'une grille assem-

2

blée, utilisable pour la mise en œuvre de l'invention,

la figure 3 est une vue de dessus du cadre de la figure 2, contenant une grille assemblée,

les figures 4 et 5 sont des vues en coupe de la figure 3, respectivement suivant les lignes IV-IV et V-V,

la figure 6 est une vue en élévation et en coupe verticale partielle, montrant l'ensemble d'une installation selon un mode particulier d'exécution de l'invention,

la figure 7 est une vue de dessus suivant la ligne VII-VII de la figure 6,

la figure 8 montre un dispositif de retournement appartenant à l'installation des figures 6 et 7, en coupe partielle suivant un plan passant par l'axe de retournement,

la figure 9 est une vue de dessus du châssis du dispositif de la figure 8,

les figures 10 et 11 montrent, respectivement en coupe suivant un plan vertical et en vue de dessous, l'équipement de soudage destiné à souder les plaquettes entre elles et à la ceinture sur chacune des deux grandes faces opposées,

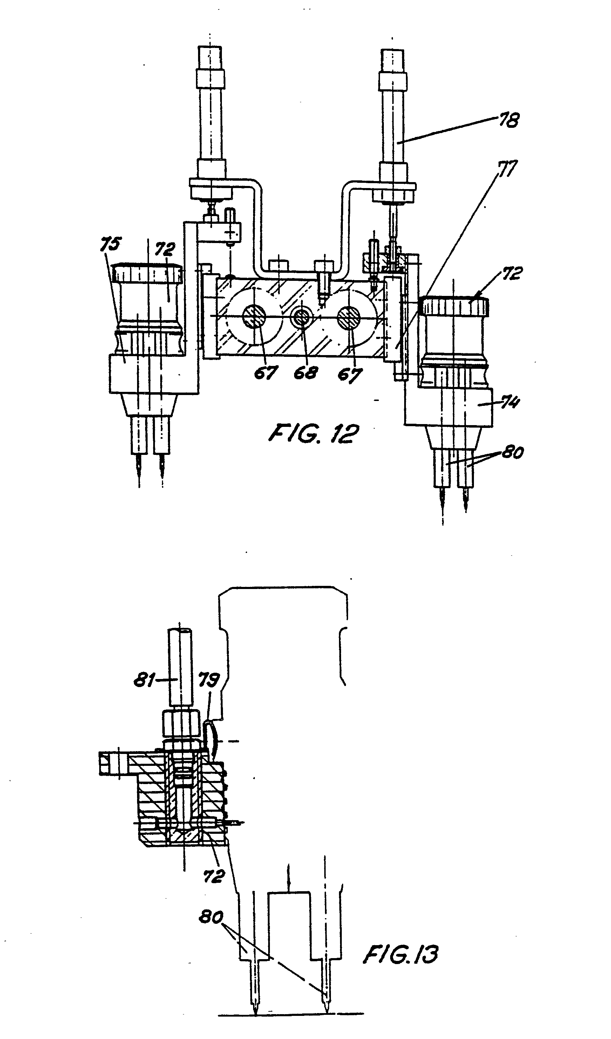

les figures 12 et 13 sont des vues en coupe suivant un plan vertical, montrant respectivement un chariot de déplacement de torche et un support de torche appartenant à l'équipement des figures 10 et 11,

la figure 14 est une vue en coupe verticale de l'équipement de soudage des extrémités des plaquettes sur la ceinture, sur les côtés de la ceinture,

la figure 15 est un schéma montrant une séquence possible d'opérations de soudage sur l'une des grandes faces.

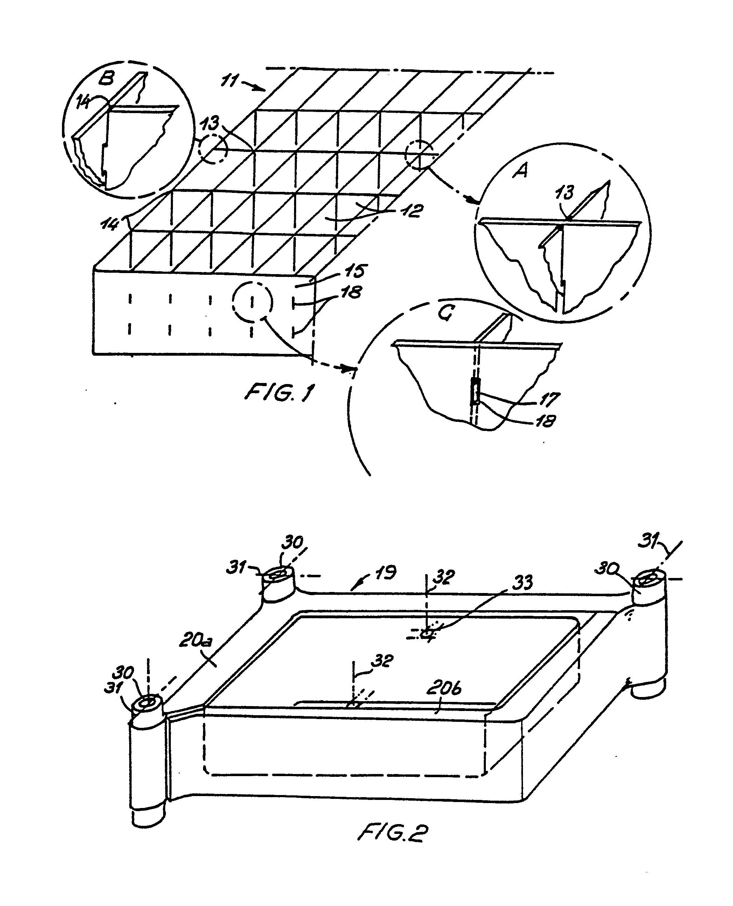

L'installation qui sera décrite à titre d'exemple permet notamment de solidariser par soudage les pièces constitutives d'une grille du genre montré en figure 1, grille qui peut avoir la constitution détaillée décrite dans le document FR-A-2 474 229. Cette grille 11 comprend deux jeux de plaquettes 12 disposées orthogonalement et assemblées à mi-fer. Une soudure de solidarisation 13, qui sera appelée par la suite « soudure de type A » et dont le détail est indiqué en A sur la figure 1, solidarise les plaquettes à chaque intersection, sur chacune des deux grandes faces de la grille 11. Les bords des plaquettes 12 forment avec la ceinture 15 une intersection en forme de T qui reçoit une soudure 14 sur chaque face, soudure qui sera qualifiée de « type B » par la suite.

Les plaquettes 12 comportent à leur extrémité des tenons 17 qui s'engagent dans des mortaises 18 pratiquées dans la ceinture. Les tenons, dont certains peuvent être déformés pour réaliser un blocage mécanique, sont soudés à la ceinture 15 en des points répartis sur la ceinture. Le soudage ainsi effectué sur chant sera appelé « de type C ».

L'installation qui sera maintenant décrite permet de réaliser dans de bonnes conditions les divers types de soudure nécessaires, avec une précision qui garantit la fiabilité et dans une enceinte à atmosphère contrôlée évitant toute pollution pouvant ultérieurement provoquer une corrosion.

Pour que le soudage des constituants de la grille s'effectue alors qu'ils sont dans une position relative correcte, la grille assemblée est tout d'abord mise en place dans un cadre destiné à dégauchir la grille assemblée, si cela est nécessaire, puis à maintenir les composants de la grille dans une position bien déterminée et, enfin, à constituer un ensemble manipulable dans l'installation et pouvant être amené dans toutes les orientations requises pour le soudage.

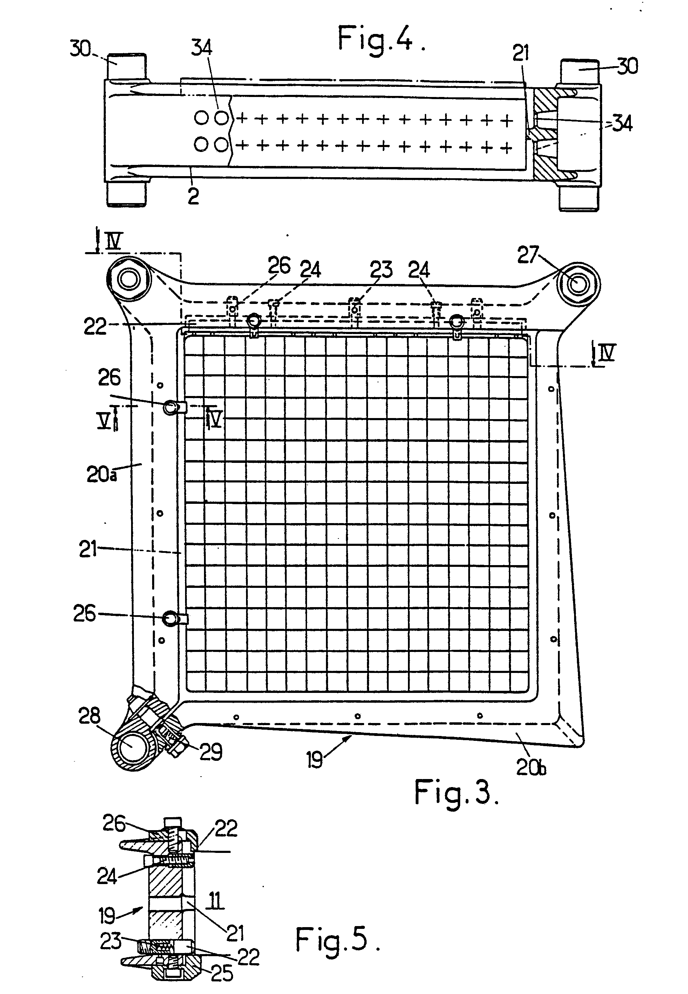

Le cadre 19 montré en figures 2 à 5 comprend deux équerres rigides 20a et 20b destinées à emprisonner la ceinture 15. Chaque équerre est munie d'une rangée de bossages 21 (figures 3 et 5) destinés à s'appuyer sur la ceinture 15, placés au droit des plaquettes. Dans le cas d'une grille du genre montré en figure 1, où chaque plaquette est munie de deux tenons 17, les bossages situés à mi-hauteur de la ceinture libèrent les espaces nécessaires à l'exécution des soudures de type C. Des barrettes 22 portées par les équerres sont repoussées, par des ressorts 23 prenant appui sur des vis de butée vers la ceinture. Ces barrettes sont placées à proximité immédiate des parties haute et basse de la ceinture. Elles permettent de compenser, du fait de l'élasticité des ressorts, les jeux dus au retrait lors de l'exécution des soudures de type A. Les vis de rappel 24 permettent de supprimer l'effet des ressorts 23 lors du montage d'une grille dans le cadre.

A la partie inférieure de chaque équerre est montée à demeure une bride 25 qui définit un plan de référence pour positionner en hauteur la grille 11 à maintenir. La partie haute de chaque équerre est munie de trous filetés, ou d'autres moyens permettant de fixer de façon amovible une bride mobile 26 permettant d'immobiliser la grille dans le cadre, dans le sens axial.

Les équerres 20a et 20b sont prévues pour être reliées par les extrémités de leurs branches. Pour cela, les extrémités des bras de l'équerre 20a portent deux axes creux 27 et 20. Ces axes sont prévus pour se centrer dans des alésages ménagés dans l'autre équerre 20b. Une vis 29, prenant appui sur l'équerre 20b par l'intermédiaire d'une rondelle élastique, peut être plus ou moins vissée dans un filetage prévu à cet effet dans l'équerre.

Trois douilles de centrage 30, constituées par un axe creux, sont montées dans des alésages pratiqués au sommet et à l'extrémité des deux branches de l'équerre 20a. Ces douilles sont flottantes, mais reliées à l'équerre par un écrou. Elles permettent, une fois bloquées, de constituer une référence d'indexage des intersections des plaquettes 12 de la grille lors du soudage.

La mise en place et la rectification éventuelle de la forme de la grille 11 s'effectuent de la façon suivante : la grille, assemblée par exemple à l'aide de l'installation décrite dans le document EP-A-104 119, est posée dans le cadre, bride 26 enlevée et vis 24 desserrées, puis la bride 26 est mise en place. Le cadre contenant la grille est placé sur un mannequin (non représenté) définissant trois axes de référence 31 pour les douilles 30, alors flottantes. Le mannequin comporte deux doigts d'indexage 32, indiqués en tirets, destinés à coopérer avec deux alvéoles 33 de la grille destinés à recevoir des tirants. Les indexeurs 32 permettent de s'assurer du positionnement précis des deux jeux de plaquettes constituant la grille, maintenus élastiquement dans le cadre par serrage des vis 24. Une fois l'indexage des deux alvéoles 33 réalisé, on serre les écrous des douilles 30 pour les bloquer sur l'équerre 20a.

Pour permettre l'exécution des soudures de type C, les équerres comportent, sur les faces coopérant avec la ceinture 15, autant de trous 34 qu'il y a de tenons 17 à souder. Ces trous ont été représentés uniquement sur la figure 4.

L'équipement de soudage est placé dans une boîte à gants 43 munie de hublots 45, 46, 47 équipés de gants de manipulation et placés chacun face à un des postes de travail.

L'installation de soudage peut être regardée comme comportant un ensemble constitué par une infrastructure fixe et les appareils de soudage qu'elle porte et un carrousel permettant de déplacer suivant un trajet circulaire les grilles à souder.

L'infrastructure fixe comporte un bâti 49 mécano-soudé fixé au sol, sur lequel repose une boîte à gants. Dans cette dernière, des écrans verticaux transparents 48 séparent les emplacements de travail et limitent les turbulences de l'atmosphère inerte. Le bâti 49 comporte des poutres supérieures 50 qui soutiennent une platine fixe 51, constituant plancher de travail. A la platine est fixé un chemin de roulement circulaire 52 coopérant avec le carrousel. La platine 51 porte également, soit directement, soit par l'intermédiaire d'une charpente, divers organes de commande qui seront décrits plus loin.

Le carrousel comporte de son côté une embase épaisse 91 en forme de couronne qui porte trois dispositifs de retournement identiques 35 placés à intervalles angulaires égaux (ce nombre n'étant pas limitatif et correspondant, dans le cas présent, au nombre d'emplacements de travail). La partie inférieure de l'embase 91 est munie d'une couronne dentée 92 qui engrène un pignon calé sur l'axe d'un moteur d'entraînement 53 appartenant à l'infrastructure fixe. Cette couronne dentée est prévue pour tourner sur le chemin de roulement circulaire 52 sous l'action du moteur 53 dont l'arbre traverse de façon étanche la platine 51. Entre le châssis de chaque dispositif de retournement, constitué par une équerre, et l'embase 91 est placé un amortisseur de vibrations (bloc de caoutchouc par exemple) qui permet en plus un léger débattement du dispositif lors du réglage fin d'indexage du système de retournement, effectué aux emplacements de travail.

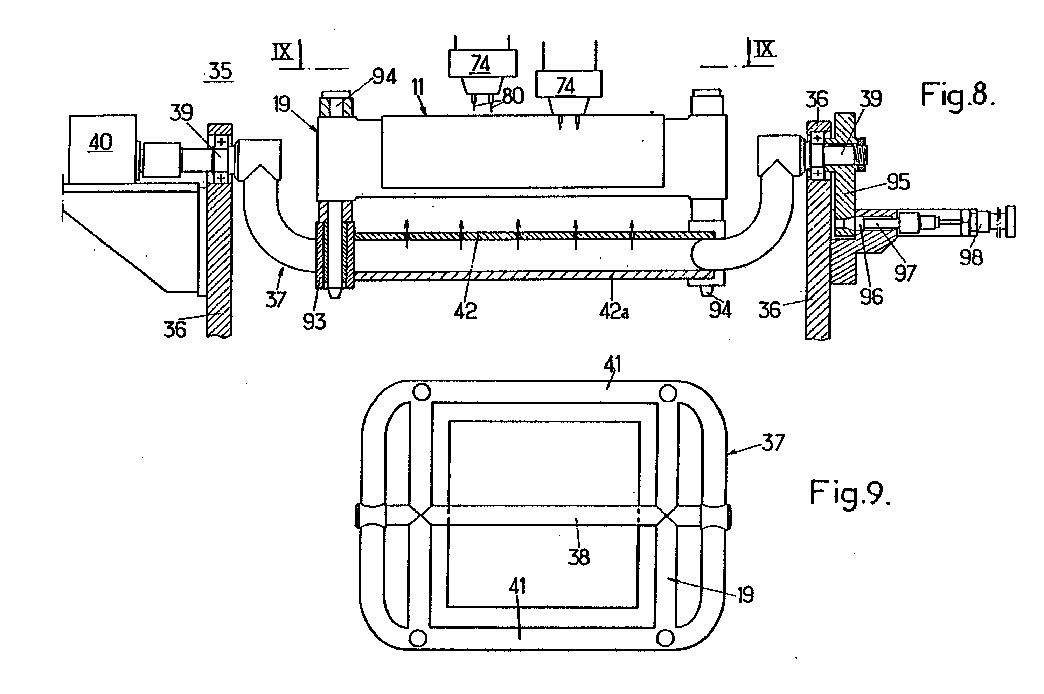

Chaque dispositif de retournement 35 comporte un châssis 36 fixé à l'embase 91 par l'intermédiaire de l'amortisseur, muni de paliers définissant un axe horizontal de rotation pour un berceau 37 de réception de cadre. Ce berceau 37 (figures 8 et 9) comporte un tube central 38 coudé et relié à des tourillons 39 montés dans les paliers du châssis 36 de façon à pouvoir tourner. L'un des tourillons 39 est tubulaire de façon à constituer une arrivée de gaz inerte et il communique avec le tube central 38. L'autre tourillon 39 est relié à un organe d'entraînement en rotation 40, avantageusement constitué par un vérin rotatif à argon. Le berceau 37 est complété par des tubes latéraux 41 reliés au tube central 38 de façon à recevoir l'argon pénétrant par le tourillon. L'ensemble des tubes constitue ainsi un berceau de réception retenant le cadre. Des trous pratiqués dans les tubes 38 et 41 permettent au gaz inerte de s'échapper sous la grille à souder, comme indiqué par les flèches sur la figure 8. Une plaque 42 de matériau poreux (par exemple en acier inoxydable fritté) peut être interposée entre le berceau et le cadre pour provoquer une diffusion homogène du gaz inerte sur toute la surface de la grille. Une plaque pleine 42a ferme le berceau 37 vers le bas et limite les fuites de gaz inerte, qui sera en général de l'argon.

Pour assurer le centrage du cadre 19, et donc de la grille, sur le berceau 37, ce dernier est muni de trois bagues 93, chacune destinée à recevoir une broche 94 de centrage également enfilée dans la douille correspondante 30 du cadre 19.

Enfin, le dispositif de retournement est muni de moyens d'indexage angulaire du berceau dans au moins deux positions à 90° l'une de l'autre. Dans le mode de réalisation illustré en figure 8, les moyens d'indexage comportent une plaque 95 semi-circulaire, fixée au tourillon creux 39 et munie de trous tronconiques 96 d'indexage en nombre égal à celui des positions angulaires de travail du berceau. Trois trous par exemple peuvent être prévus, le trou médian correspondant à la position du berceau montrée en figure 8.

Les trous 96 sont prévus pour recevoir un doigt d'indexage et de verrouillage 97 commandé par un vérin à double effet 98 porté par le châssis du dispositif de retournement 35. La mise en action du vérin 98 assure un indexage de la plaque 95 et donc du berceau et le maintien ultérieur du berceau dans la position convenable.

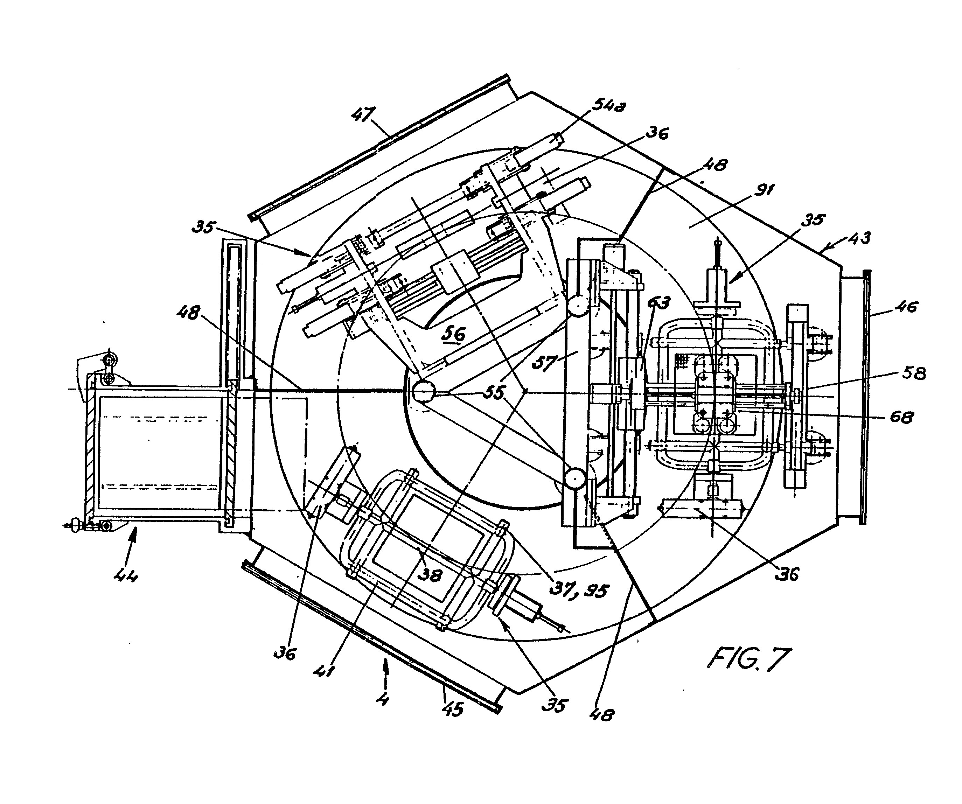

Le carrousel portant les dispositifs de basculement 35 permet d'amener chacun d'eux en trois emplacements de travail successifs. Le premier emplacement, face au hublot 45 (figure 7) sert au chargement des cadres contenant les grilles sur un dispositif de basculement 35, puis au retrait des cadres. Le second emplacement, face au hublot 46, sert à l'exécution des soudures de types A et B. Le troisième emplacement, face au hublot 47, est destiné à l'exécution des soudures de type C.

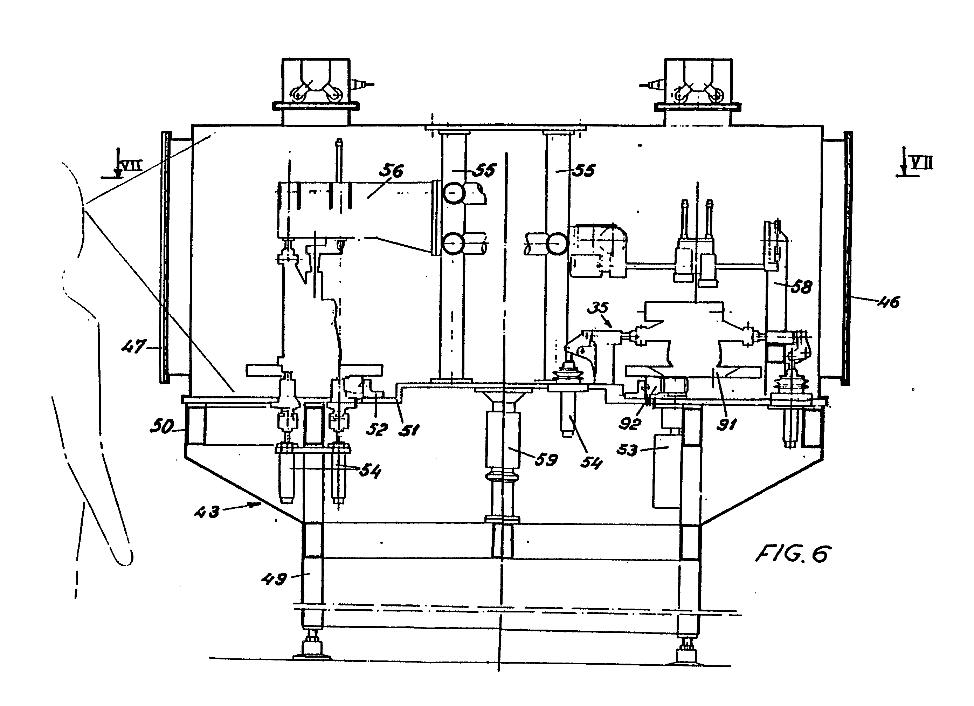

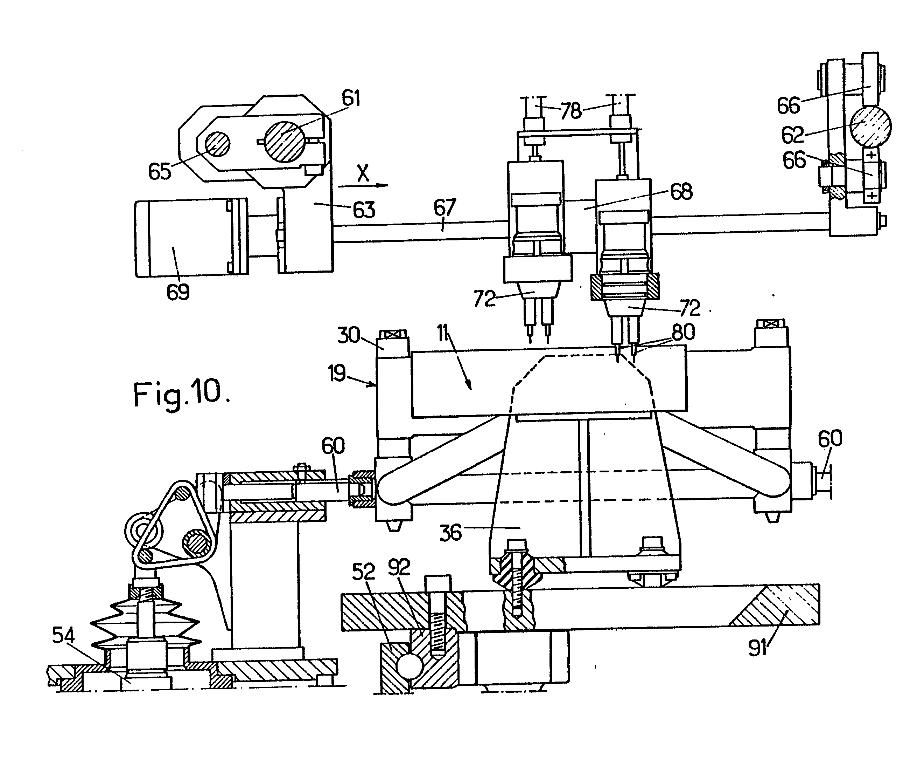

L'installation de soudage proprement dite, montrée en figures 6, 7 et 10, est placée dans la boîte à gants 43 comportant un sas d'introduction 44. La platine 51 porte, en chacun des emplacements de soudage, des vérins 54 dont la tige est reliée par une tringlerie à des doigts d'indexage 60 qui viennent s'engager dans des bagues fixées au berceau 37 et retiennent celui-ci dans une position précise, servant de référence pour les organes de soudage. Des soufflets assurent l'étanchéité à la traversée de la platine par les tiges de ces vérins (figures 6 et 10). La platine porte également, dans sa partie centrale, trois colonnes 55 régulièrement réparties angulairement et reliées au plafond de la boîte à gants. Ces trois colonnes 55 supportent également les équipements de soudage qui seront maintenant décrits et dont les diverses alimentations et circuits de commande traversent la platine par un manchon d'étanchéité 59 (figure 6).

Au premier emplacement de soudage (figures 6, 7, 10 et 11), une potence horizontale fixe 57 relie deux des colonnes 55. Parallèlement à cette potence est disposée une charpente verticale 58. La potence 57 et la charpente 58 supportent des chemins de roulement parallèles pour l'équipement qui effectue les soudures de types A et B sur les grandes faces de la grille.

Cet équipement de soudage comprend un chariot 68 sur lequel la torche (ou les torches) de soudage 72 est déplaçable verticalement par des moyens qui seront décrits plus loin. Ce chariot est déplaçable suivant deux directions orthogonales X et Y, de façon qu'on puisse amener une torche de soudage au droit de chacune des soudures à effectuer sur la grille, maintenue horizontale par le dispositif de basculement 35.

Les moyens de déplacement et de guidage selon la direction Y comportent deux arbres horizontaux et parallèles 61 et 62, fixés l'un aux colonnes 55 qui portent la potence 57, l'autre à la charpente 58. Sur l'arbre 61 coulisse, par l'intermédiaire de douilles à bille, un chariot 63 muni de glissières 67 qui définissent la direction X. Les déplacements du chariot 63 sont commandés par un mécanisme qui comprend un moteur électrique pas à pas non représenté qui entraîne la vis 65 d'une liaison filetée à circulation de bille dont l'écrou est solidaire du chariot 63. Le supportage et le guidage du chariot 63 sont complétés par l'arbre 62, emprisonné entre deux galets 66 portés par le chariot 63 (figure 10).

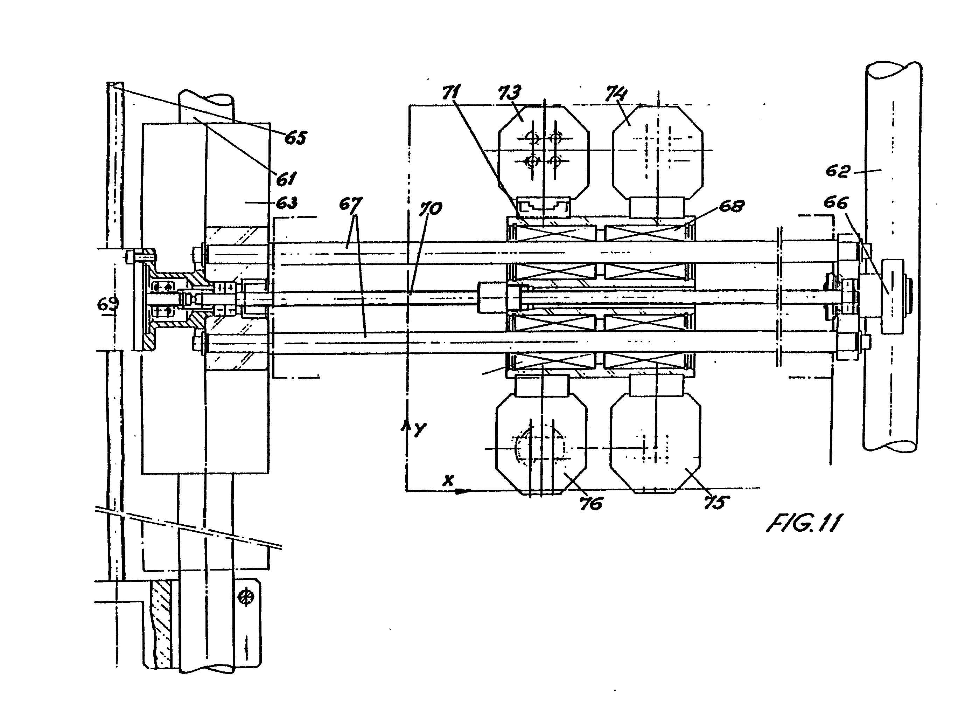

Le chariot 68 est guidé sur les glissières 67 par quatre douilles à bille 71 (figure 11). Le mécanisme permettant de déplacer ce chariot suivant la direction X comporte une liaison filetée à bille constituée par une vis 70 qui s'engage dans une douille taraudée solidaire du chariot et un moteur électrique pas à pas 69 d'entraînement de la vis 70.

Dans le mode de réalisation représenté à titre d'exemple sur les figures, le chariot 68 porte quatre torches de soudage 72, chacune munie de quatre électrodes. Ces torches sont destinées à effectuer un soudage électrique TIG (sous atmosphère protectrice de gaz inerte, sans métal d'apport). Les quatre électrodes portées par une même torche sont réglables en hauteur indépendamment et sont alimentées indépendamment, ce qui autorise une grande souplesse d'emploi. Mais de nombreuses variantes sont possibles et, au surplus, le soudage peut être effectué par des procédés autres.

Chacune des torches 72 est fixée sur une table 73, 74, 75 ou 76 déplaçable verticalement sur des rails 77 portés par le chariot 68. Un vérin 78 associé à chaque table permet de la déplacer verticalement entre une position basse de soudage et une position haute où elle est dégagée de la grille à souder.

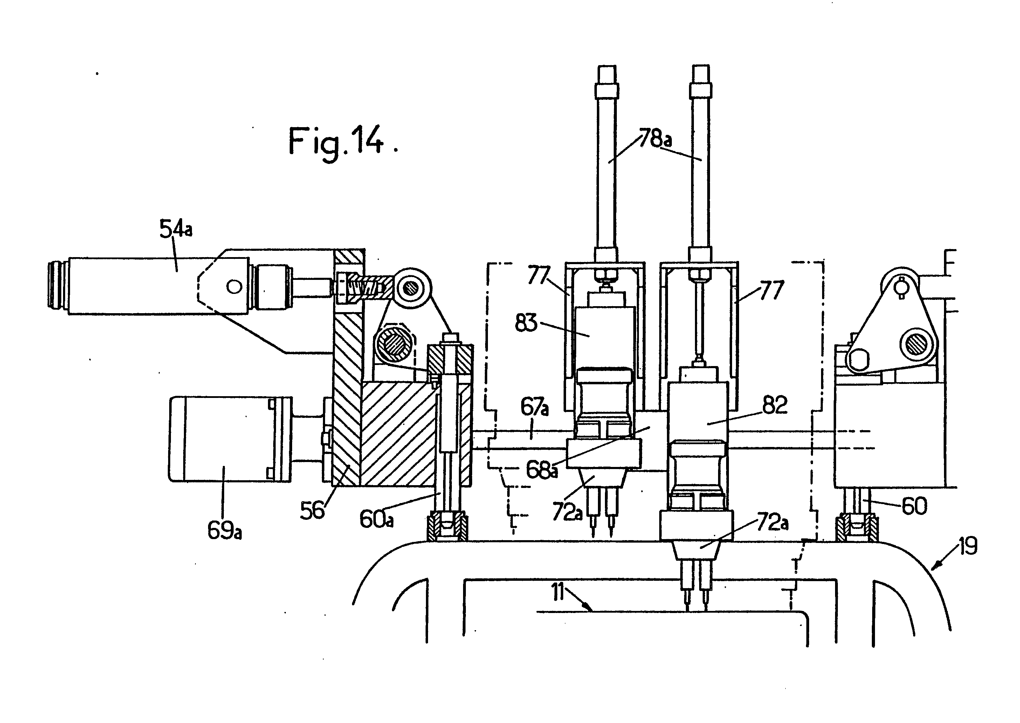

L'alimentation électrique peut être effectuée, pour chaque électrode 80, par un ressort 79 qui maintient en même temps la torche 72 (représentée en traits mixtes sur la figure 13) sur une fraction de la table constituée en matériau électriquement isolant. L'arrivée de courant au ressort peut être assurée par le tube 81 d'amenée de gaz inerte à l'électrode 80. La partie terminale du tube 81 est fixée, par un écrou qui retient également le ressort 79, à un raccord percé d'un passage d'amenée de gaz inerte de protection à l'électrode. L'écartement entre deux électrodes adjacentes d'une même torche correspond au pas d'exécution des soudures de type A sur la grille ou à un multiple entier de ce pas.

Au second emplacement de soudage (figures 6, 7 et 14), où sont effectuées les soudures de type C sur les chants des grilles après basculement de 90° par le dispositif 35, il suffit que l'équipement de soudage permette de déplacer une torche de soudage le long de la ceinture, à condition que la torche comporte autant d'électrodes qu'il y a de lignes de tenons 17 sur la grille. L'équipement de soudage est alors plus simple qu'au premier emplacement, puisqu'il suffit de déplacer la torche (ou les torches) suivant la direction X parallèle à la ceinture.

L'équipement montré sur les figures comporte un chariot 68a qui, comme le chariot 68, coulisse sur des glissières 67a. Mais ces glissières sont directement fixées à une potence 56 reliant deux colonnes 55, au lieu d'être portées par un chariot déplaçable suivant la direction Y. Les déplacements du chariot 68a sont commandés par un moteur pas à pas 69a, comme dans le cas de l'équipement pour effectuer les soudures de types A et B. Le chariot 68a est muni de deux tables 82 et 83 munies de moyens de déplacement vertical identiques à ceux du premier équipement. Les doigts d'indexage 60a sont cette fois placés de façon à retenir le berceau dans une orientation à 90° de celle qu'il a au premier emplacement de soudage.

On peut envisager plusieurs séquences d'exécution de l'ensemble des soudures nécessaires sur une grille dans l'installation qui vient d'être décrite. Il sera souvent avantageux toutefois de procéder comme suit.

La grille 11 assemblée est placée dans le cadre 19 et celui-ci monté sur un mannequin. La bride supérieure est mise en place. Les vis 24 sont enfoncées de façon à appliquer les barrettes 22 sur la ceinture. L'ensemble ainsi constitué est monté sur un mannequin de façon à vérifier le non-gauchissement de la grille, en utilisant comme références deux alvéoles 33 dans lesquels s'engagent des index 32. Si nécessaire, la grille est dégauchie par action sur les vis 29 puis les écrous des douilles de centrage 30 sont bloqués pour immobiliser ces douilles dans leurs alésages. Le cadre est enlevé du mannequin, puis introduit dans le sas 44 de la boîte à gants. Cette dernière est mise sous vide partiel, puis alimentée en gaz inerte (argon en général). Le cadre équipé de sa grille est placé sur le dispositif de basculement 35, disposé avec le berceau horizontal face au hublot 45, comme indiqué en figure 7. Les broches 94 sont mises en place pour immobiliser le cadre sur le berceau (figure 8). On fait tourner le carrousel de 120° pour amener le dispositif de retournement 35 au premier emplacement de soudage (à droite sur la figure 7). On effectue alors les soudures de types A et B, suivant un programme pré-enregistré mis en œuvre par un automate placé à l'extérieur de la boîte à gants. La progression utilisée est avantageusement en escargot et choisie de façon à minimiser les déformations dues aux retraits de soudure. Chaque torche 72 effectue une partie des points de soudure avant de s'effacer pour permettre à une autre torche de poursuivre l'exécution.

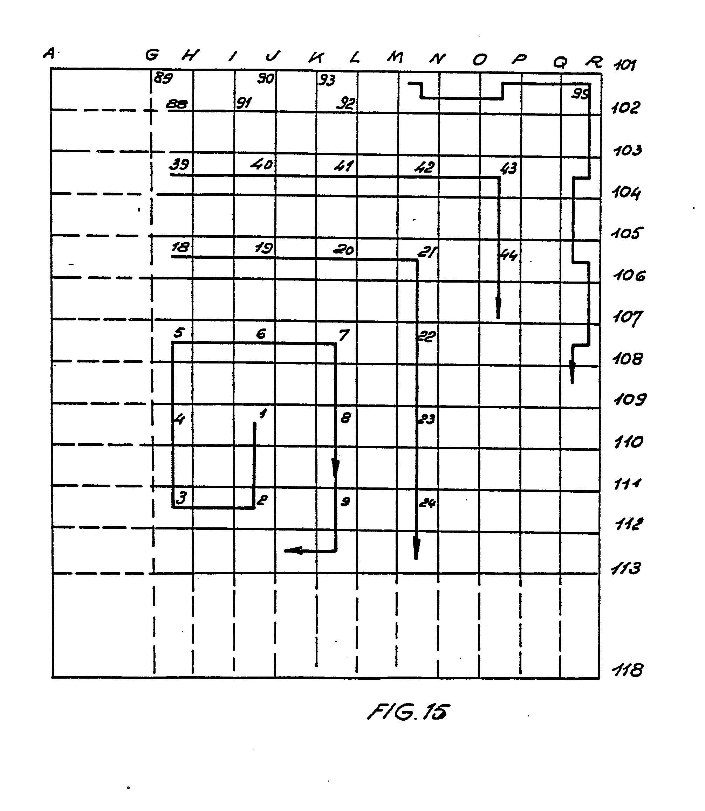

La figure 15 montre un exemple de progression en escargot ou spirale prévue dans ce but et adaptée à une grille à 17 × 17 alvéoles. L'emplacement de chaque soudure est indiqué par une lettre en abscisses, un nombre en ordonnées et les chiffres dans les alvéoles indiquent les points successifs de positionnement de la table portant les électrodes qui interviennent pour le soudage.

La table 73 est tout d'abord amenée au centre de la grille, à l'emplacement indiqué par le repère 1 sur la figure 15. Les quatre électrodes 80 portées par la table 73 sont alors alimentées, après descente de la table 73, pour effectuer les soudures A en I 109, I 110, J 109 et J 110. Le moteur est commandé pour déplacer le chariot 68 de deux pas, donc pour amener la table 73 à l'endroit indiqué par le repère 2. Les électrodes 80 sont descendues et les soudages en I 111, I 112, J 111 et J 112 effectués.

Les électrodes portées par la table 73 seront utilisées jusqu'à la position 19. Puis, à partir de la position 20, les soudures sont effectuées par la table 74 qui s'effacera à son tour à la position repérée 39. La table 75 effectuera les soudages des positions 40 à 71 et la table 76 effectuera le soudage des positions 77 à 118.

On voit que toutes les tables, sauf la table 76, effectuent des soudures à vingt emplacements. Ce nombre est inférieur à celui possible avec une même électrode sans intervention sur cette dernière. La table 76 doit au contraire effectuer un nombre de soudures inférieur à vingt mais, à chaque opération, n'interviennent que certaines des électrodes : en effet, pour le soudage de la ceinture périphérique 15 n'interviennent que deux ou même une seule électrode pour une position donnée de la table. Au surplus, les dimensions des cellules périphériques pouvant être légèrement différentes de celles des cellules intérieures, on peut être amené à effectuer des déplacements qui ne sont pas exactement de deux pas, ainsi que des déplacements inférieurs à un pas.

Une fois ainsi exécutées les soudures de types A et B sur une face, on fait tourner le carrousel pour présenter la grille au second emplacement de soudage. Le dispositif de retournement est basculé de façon à présenter un des côtés de la grille à l'équipement de soudage. La série complète des soudures C est exécutée sur le côté de la grille, puis le dispositif de retournement 35 est actionné pour faire tourner la grille de 180°. Les soudures de la face latérale opposée à celle qui vient d'être soudée sont effectuées. On commande alors une rotation de 90° du dispositif pour replacer la grille à l'horizontale, dans sa position primitive. On fait tourner le carrousel pour présenter la grille au poste de chargement et de contrôle visuel. Puis, si la boîte à gants contient trois emplacements seulement, comme dans le cas illustré, on retourne le cadre et la grille, à l'aide des gants prévus dans les hublots, pour présenter aux équipements de soudage la face horizontale et les côtés non soudés lors des séquences précédentes.

On voit qu'on dispose ainsi d'une installation qui assure un maintien mécanique précis des grilles pendant le soudage, sans contrainte susceptible de déformer les pièces, permet une séquence de soudage limitant les retraits et déformations et compensant les jeux qui en résultent, les turbulences du gaz de protection étant limitées par la présence d'écrans.

**Revendications**

1. Procédé de soudage de grilles constituées par des jeux de plaquettes disposées orthogonalement et dont les parties terminales sont solidarisées d'une ceinture, caractérisé en ce qu'on place la grille (11) dans un cadre (19) de mise en forme et de maintien mécanique de la grille permettant d'accéder aux points à souder sur les deux faces et au moins deux côtés opposés de la grille, on place le cadre contenant la grille sur un dispositif de retournement (35) appartenant à un carrousel, on amène le cadre, à l'aide du carrousel, en un premier emplacement de soudage et on y effectue le soudage sur au moins une face de la grille à l'aide d'un organe de soudage déplaçable selon deux directions perpendiculaires permettant de l'amener au droit de chacun des points de soudage sur la face ; et on amène le cadre en un second emplacement de soudage où l'on soude les plaquettes à la ceinture à l'aide d'un second organe de soudage déplaçable selon une seule direction, après basculement de 90° du cadre (19) à l'aide du dispositif de retournement (35) ; et on répète éventuellement les opérations jusqu'à exécution de l'ensemble des soudages.

2. Procédé selon la revendication 1, caractérisé en ce que l'on soude les points de croisement des plaquettes selon un trajet en spirale, plusieurs soudures étant exécutées à la fois au moins à la partie intérieure de la grille.

3. Installation de soudage de grilles constituées par des jeux de plaquettes disposées orthogonalement et dont les parties terminales sont solidarisées d'une ceinture, les plaquettes devant être soudées entre elles et avec la ceinture à leur point de raccordement et présentant des tenons à souder sur les côtés de la grille, installation caractérisée en ce qu'elle comprend, dans une enceinte à atmosphère contrôlée munie d'un sas, un carrousel portant au moins un dispositif de retournement (35) qui comporte un berceau (36) de réception d'un cadre (19) de maintien mécanique d'une grille (11), le carrousel étant capable d'amener le cadre successivement en un premier emplacement de soudage et en un second emplacement de soudage et le dispositif ayant des moyens de changement d'orientation du cadre, en ce qu'un premier équipement de soudage des plaquettes placé au premier emplacement comporte un organe de soudage et des moyens pour le déplacer parallèlement à la grille de façon à l'amener au droit de chacun des points de soudage et perpendiculairement à la grille entre une position de soudage et une position rétractée, et en ce qu'un second équipement de soudage placé au second emplacement comprend un organe de soudage déplaçable suivant une direction parallèle à l'un des côtés de la grille dans l'orientation donnée à celle-ci par le dispositif de retournement, permettant d'exécuter les soudages des plaquettes à la ceinture.

4. Installation selon la revendication 3, caractérisée en ce que chaque équipement de soudage comprend plusieurs électrodes de soudage capables d'être actionnées indépendamment et présentant un écartement égal à celui des soudures à effectuer.

5. Installation selon la revendication 3 ou 4, caractérisée en ce que le dispositif de retournement est prévu pour donner au cadre des orientations situées à 90° les unes des autres, et est associé à des moyens d'indexage permettant d'immobiliser le cadre dans une position de référence.

6. Installation selon la revendication 3, caractérisée en ce que chaque équipement de soudage comprend plusieurs organes de soudage déplaçables indépendamment vers la grille et à partir de celle-ci, chaque torche ayant plusieurs électrodes (80) permettant d'effectuer plusieurs soudures à la fois.

7. Installation selon l'une quelconque des revendications 3 à 6, caractérisée en ce que le cadre (19) de maintien mécanique d'une grille (11) comporte deux équerres dont les branches sont raccordables l'une à l'autre par des moyens ajustables, le cadre étant prévu pour recevoir des organes (30) de centrage par rapport au berceau (36).

8. Installation selon la revendication 7, caractérisée en ce que le cadre comporte des bossages (21) destinés à s'appliquer contre la ceinture au droit des plaquettes et des barrettes (22) encadrant les bossages (21) et repoussées élastiquement en appui contre la ceinture.

9. Installation selon la revendication 8, caractérisée en ce que le cadre présente des trous (34) d'accès en des points de soudage de tenons (17) prévus sur les plaquettes dans des ouvertures (18) prévues dans la ceinture.

## Claims

1. A process for welding grids comprising sets of mutually orthogonal plates whose endmost parts are secured to a belt, characterized in that the grid (11) is located in a frame (19) for shaping and mechanically holding the grid while allowing access to points to be welded on the two faces and at least two mutually opposite sides of the grid ; the frame containing the grid is placed on a revolving device (35) belonging to a carrousel ; the frame is moved, with the carrousel, to a first welding position and welding on a least one face of the grid is carried out with a welding element movable along two mutually orthogonal directions for bringing it in alignment with each of the welding points on the face ; and the frame is moved to a second welding position where the plates are welded to the belt with a second welding element movable along a single direction, after the frame (19) has been swung by 90° by the revolving device (35) and the operations are possibly repeated until all the welding operations have been carried out.

2. Process according to claim 1, characterized in that the crossing points of the plates are welded along a spiral path, a plurality of welds being carried out simultaneously, at least at the inner portion of the grid.

3. Installation for welding grids consisting of sets of mutually orthogonal plates whose endmost parts are secured to a belt, the plates having to be welded mutually and with the belt at their connecting points and having lugs to be welded onto the sides of the grid, said installation being characterized in that it comprises, in a controlled atmosphere chamber having an air lock, a carrousel carrying at least one revolving device (35) which comprises a cradle (36) for receiving a frame (19) for mechanically holding a grid (11), the carrousel being capable of bringing the frame successively to a first welding position and a second welding position and the device having means for changing the orientation of the frame ; in that a first assembly for welding the plates placed in the first position comprises a welding member and means for moving it parallel to the grid so as to bring it in alignment with each of the welding points and perpendicularly to the grid between a welding location and a retracted location, and in that a second welding assembly placed at the second position comprises a welding member movable in a direction parallel to one of the sides of the grids in the orientation given thereto by the revolving device for welding the plates to the belt.

4. Installation according to claim 3, characterized in that each welding assembly comprises several independently actuatable welding electrodes having a spacing equal to that of the welds to be made.

5. Installation according to claim 3 or 4, characterized in that the revolving device is provided for giving to the frame angular positions situated at 90° from each other, and is associated with indexing means for immobilizing the frame in a reference position.

6. Installation according to claim 3, characterized in that each welding assembly comprises several welding elements movable independently to and away from the grid, each torch having several electrodes (80) for effecting several welds at the same time.

7. Installation according to any one of claims 3 to 6, characterized in that the frame (19) for mechanically holding a grid (11) comprises two right-angled brackets whose arms are connectable to each other by adjustable means, the frame being adapted to receive members (30) for centering with respect to the cradle (36).

8. Installation according to claim 7, characterized in that the frame comprises bosses (21) for applying against the belt in alignment with the plates and strips (22) surrounding the bosses (21) and urged resiliently in abutment against the belt.

9. Installation according to claim 8, characterized in that the frame has access holes (34) at points for welding tenons (17) provided on the plates in openings (18) formed in the belt.

## Patentansprüche

1. Verfahren zum Schweißen von Gittern, die aus Gruppen von Plättchen gebildet sind, die rechtwinklig angeordnet sind und deren Endteile mit einem Gürtel fest verbunden sind, dadurch gekennzeichnet, daß man das Gitter (11) in einem Rahmen (19) zur Formgebung und mechanischen Halterung des Gitters, der den Zugang zu den zu schweißenden Punkten auf den beiden Flächen und an wenigstens zwei gegenüberliegenden Seiten des Gitters ermöglicht, den das Gitter enthaltenden Rahmen auf einer zu einem Karussel gehörenden Wendeeinrichtung (35) anordnet, den Rahmen mit Hilfe des Karussels in eine erste Schweißstelle bringt und dort die Schweißung auf wenigstens einer Fläche des Gitters mit Hilfe eines Schweißorgans vornimmt, das längs zweier senkrechter Richtungen verschiebbar ist, wodurch seine Zuführung zur Stelle jedes der Schweißpunkte auf der Fläche ermöglicht wird, und den Rahmen in eine zweite Schweißstelle bringt, wo man die Plättchen mit dem Gürtel mit Hilfe eines zweiten Schweißorgans bringt, das längs einer einzigen Richtung, nach Kippen des Rahmens (19) um 90° mit Hilfe der Wendeeinrichtung (35) verschiebbar ist, und eventuell die Arbeitsgänge bis zur Durchführung der Gesamtheit der Schweißungen wiederholt.

2. Verfahren nach Anspruch 1, dadurch gekennzeichnet, daß man die Kreuzungspunkte der Plättchen längs einer Spiralbahn schweißt, wobei mehrere Schweißungen wenigstens im inneren Teil des Gitters gleichzeitig durchgeführt werden.

3. Vorrichtung zum Schweißen von Gittern, die aus Gruppen von Plättchen gebildet sind, die rechtwinklig angeordnet sind und deren Endteile mit einem Gürtel fest verbunden sind, welche Plättchen untereinander und mit dem Gürtel an ihrem Verbindungspunkt verschweißt werden müssen und mit den Seiten des Gitters zu verschweißende Zapfen aufweisen, welche Vorrichtung dadurch gekennzeichnet ist, daß sie in einem Gehäuse mit gesteuerter Atmosphäre, das mit einem Sieb ausgerüstet ist, ein Karussel aufweist, das wenigstens eine Wendeeinrichtung (35) trägt, die eine Wiege (36) zur Aufnahme eines Rahmens (19) zur mechanischen Halterung eines Gitters (11) aufweist, welches Karussel geeignet ist, den Rahmen nacheinander in eine erste Schweißstelle und in eine zweite Schweißstelle zu bringen, und die Einrichtung Mittel zur Ausrichtungsänderung des Rahmens hat, und daß eine erste Einrichtung zum Schweißen der Plättchen, die an der ersten Stelle angeordnet ist, ein Schweißorgan und Mittel zu seiner Verschiebung parallel zum Gitter derart, daß es an die Stelle jedes der Schweißpunkte gebracht wird, und senkrecht zum Gitter zwischen einer Schweißstellung und einer zurückgezogenen Stellung aufweist, und daß eine zweite Schweißeinrichtung, die an der zweiten Stelle angeordnet ist, ein Schweißorgan aufweist, das längs einer Richtung verschiebbar ist, die parallel zu einer der Seiten des Gitters in der Ausrichtung ist, die diesem durch die Wendeeinrichtung gegeben ist, wodurch die Durchführung der Verschweißungen der Plättchen mit dem Gürtel ermöglicht wird.

4. Vorrichtung nach Anspruch 3, dadurch gekennzeichnet, daß jede Schweißeinrichtung mehrere Schweißelektroden aufweist, die zur unabhängigen Betätigung geeignet sind und einen dem der durchzuführenden Schweißungen gleichen Abstand aufweisen.

5. Vorrichtung nach Anspruch 3 oder 4, dadurch gekennzeichnet, daß die Wendeeinrichtung vorgesehen ist, um dem Rahmen Ausrichtungen zu geben, die untereinander um 90° verschieden sind, und mit Markierungsmitteln verbunden sind, die eine Festlegung des Rahmens in einer Bezugsstellung ermöglichen.

6. Vorrichtung nach Anspruch 3, dadurch gekennzeichnet, daß jede Schweißeinrichtung mehrere Schweißorgane aufweist, die unabhängig zum Gitter und von diesem aus verschiebbar sind, wobei jeder Brenner mehrere Elektroden (80) aufweist, die die Durchführung mehrerer Schweißungen zur gleichen Zeit ermöglichen.

7. Vorrichtung nach irgendeinem der Ansprüche 3 bis 6, dadurch gekennzeichnet, daß der Rahmen (19) zur mechanischen Halterung eines Gitters (11) zwei Winkel aufweist, deren Schenkel untereinander durch justierbare Mittel verbindbar sind, wobei der Rahmen vorgesehen ist, um Zentrierorgane (30) gegenüber der Wiege (36) aufzunehmen.

8. Vorrichtung nach Anspruch 7, dadurch gekennzeichnet, daß der Rahmen Vorsprünge (21), die zur Anlage gegen den Gürtel an der Stelle der Plättchen bestimmt sind, und Kappen (22) aufweist, die die Vorsprünge (21) einfassen und bei Anlage gegen den Gürtel elastisch zurückgestoßen werden.

9. Vorrichtung nach Anspruch 8, dadurch gekennzeichnet, daß der Rahmen Zugangslöcher (34) an Schweißpunkten von Zapfen (17) aufweist, die auf den Plättchen in Öffnungen (18) vorgesehen sind, die im Gürtel angebracht sind.

FIG. 1

FIG.2

1

Fig.4.

Fig.3.

Fig.5.

FIG. 6

0 109 889

FIG.7

Fig.8.

Fig.9.

Fig.10.

FIG.11

FIG. 12

FIG. 13

# Fig.14 .

FIG.15